**Europäisches Patentamt**

**European Patent Office**

**Office européen des brevets**

(19)

(11) Veröffentlichungsnummer: **0 191 925
B1**

(12) **EUROPÄISCHE PATENTSCHRIFT**

(45) Veröffentlichungstag der Patentschrift:
03.08.88

(51) Int. Cl.⁴: **B 01 J  23/44,** A 62 B  19/02

(21) Anmeldenummer: **85115608.3**

(22) Anmeldetag: **07.12.85**

(54) Verfahren zur Herstellung eines Katalysators zur Oxidation von Kohlenstoffmonoxid.

(30) Priorität: **15.12.84  DE 3445803**

(43) Veröffentlichungstag der Anmeldung:
**27.08.86 Patentblatt 86/35**

(45) Bekanntmachung des Hinweises auf die Patenterteilung:
**03.08.88 Patentblatt 88/31**

(84) Benannte Vertragsstaaten:
**DE FR GB IT SE**

(56) Entgegenhaltungen:
**DE - A - 2 042 815
DE - A - 2 811 627**

(73) Patentinhaber: **Drägerwerk Aktiengesellschaft,
Moislinger Allee 53-55, D-2400 Lübeck 1 (DE)**

(72) Erfinder: **van der Smissen, Carl-Ernst, Dr., Am
Traveeck 30, D-2400 Lübeck (DE)**

## Beschreibung

Die Erfindung betrifft ein Verfahren zur Herstellung eines Katalysators zur Oxidation von Kohlenstoffmonoxid mit einem Träger aus Aluminiumoxid.

Ein derartiger Katalysator wird als Luftreinigungsmittel in Luftfiltern verwendet und ist bereits aus der ASME publication der American Society of Mechanical Engineers der Ausgabe 77-ENAs-28 bekannt. Er wird im folgenden als Pt-Katalysator bezeichnet.

Es katalysieren hier Platinmetalle auf Trägermaterialien die Umsetzung von CO mit Luftsauerstoff. Diese Eigenschaft wird auf granulierten, platinmetallhaltigen Trägern als Filtermasse für CO-Filter verwendet. Während das ebenfalls als Luftreinigungsmittel für CO-Filter bekannte Hopkalit unter dem Einfluss der Luftfeuchtigkeit seine Wirksamkeit verliert, ist die Filtermasse mit Pt-Katalysator im wesentlichen gegen Luftfeuchtigkeit beständig. Es hat sich jedoch bei höheren Feuchtegraden und vorübergehend auch bei hohen CO-Konzentrationen eine gewisse Leistungseinbusse gezeigt, zu deren Ausgleich ein grösseres Volumen an Filtermasse vorgesehen werden muss. Ausser erhöhtem Aufwand und Platzbedarf ist damit, z.B. bei dem Einsatz in Atemschutzfiltern, eine Gewichtsbelastung des Trägers gegeben.

Aus der DE-B-2 214 056 ist ein Katalysator und ein Verfahren zu dessen Herstellung bekannt geworden, der für die Reduktion von Nitroverbindungen einsetzbar ist. Dazu wird auf einem Aluminiumoxidträger Palladium und Vanadium in bestimmten Gewichtsanteilen aufgebracht. Das Trägermaterial Aluminiumoxid ist dabei mindestens zu 20% in Spinell übergeführt worden.

Es hat sich erwiesen, dass ein derartiger Katalysator nicht geeignet ist, um eine Oxidation von Schadstoffen in der Atmungsluft, insbesondere von Kohlenstoffmonoxid, zu katalysieren. Hinderlich dafür ist der hohe Anteil an Spinellen im Aluminiumoxid. Auch eine Herabsetzung des Spinellenanteils führt nicht zum Erfolg, denn durch die Luftfeuchte bedingt und durch möglicherweise auftretende hohe Anteile an Kohlenstoffoxid in der Atemluft wird bei dem bekannten Katalysator die Oxidation von Kohlenstoffoxid nicht in dem erforderlichen Masse katalysiert, auch wenn dessen Spinellenanteil gänzlich auf Null herabgesetzt würde.

In der DE-A-2 811 627 ist ein Katalysator zur Reinigung der Luft von Kohlenmonoxid und ein Verfahren zu dessen Herstellung angegeben, bei welchem ein Trägermaterial mit einem Palladium- oder Platinsalz imprägniert und welches anschliessend unter Zugabe von Hydrazin reduziert wird.

Die Verringerung der Leistungsfähigkeit des bekannten Katalysators bei Anwesenheit von hohen Feuchtegehalten in der Luft wird jedoch nicht vermieden.

Der Erfindung liegt die Aufgabe zugrunde, ein Verfahren zur Herstellung eines Katalysators der genannten Art so zu verbessern, dass ein Katalysator erhalten wird, bei dem auch bei hohen Luftfeuchtigkeiten und CO-Konzentrationen eine Leistungssabnahme vermieden und damit eine kleinere und leichtere Filterfüllung möglich wird.

Diese Aufgabe wird dadurch gelöst, dass der Träger aus hochreinem Aluminiumoxid (Reinheitsgrad mehr als 99%) besteht, der mit einer wässrigen Lösung Ammoniumvanadat zur Imprägnierung mit 1 Gew.-% Vanadin getränkt, der imprägnierte Träger im Vakuum getrocknet und zur Umwandlung von Ammoniumvanadat in Vanadinpentoxid bei etwa 200°C erhitzt, danach mit einer wässrigen Lösung von Palladiumchlorid zur Imprägnierung mit 0,5 Gew.-% Palladium getränkt, anschliessend getrocknet und mit stark verdünnter Hydrazinlösung behandelt, das Palladiumchlorid reduziert, die Hydrazinlösung abgegossen und der doppelt imprägnierte Träger mit Wasser gewaschen wird.

Die mit der Erfindung erzielten Vorteile bestehen insbesondere darin, dass die Pt-Katalysatoren mit den Vanadiumverbindungen wie z.B. Oxiden oder den Vanadaten Substanzen enthalten, deren Oxidationsleistung von höheren Feuchtegraden nicht beeinträchtigt wird. Damit wird der sich dann bemerkbar machende Leistungsrückgang des Pt-Katalysators vermieden. Die durch die Anwendung der Platinmetalle auf dem Träger erzeugte Fähigkeit zur katalytischen CO-Oxidation in trockenem Zustande wird durch die Vanadinimprägnierung nicht gestört. Während Doppelimprägnierungen häufig zu einer Einbusse einer Eigenschaft zugunsten einer anderen Eigenschaft führen, stören sich hier die Platinmetallimprägnierung und die Vanadinimprägnierung nicht. Im Gegenteil ergibt sich mit beiden Imprägnierungen sogar eine Verstärkung sowohl der Wirksamkeit im trockenen wie im feuchten Zustand als auch eine Stabilisierung gegenüber dem Auftreten hoher CO-Konzentrationen.

Es kann günstig sein, zur Erzielung besonderer Gasabscheideleistungen zusätzlich zu den Vanadinverbindungen noch andere Metalloxide z.B. Zinkoxide oder Metallsalze, z.B. Chloride oder Chromate, auf den Träger zu bringen.

Aufbau und Herstellung eines Luftreinigungsmittels nach der Erfindung sollen an einem Beispiel erläutert werden:

α-Aluminiumoxid als Träger wird mit einer wässrigen Lösung von Ammoniumvanadat getränkt, so dass sich auf dem Träger 1 Gew.-% Vanadin befindet. Der imprägnierte Träger wird im Vakuum getrocknet und dann auf 200°C erhitzt, so dass das Ammoniumvanadat in Vanadinpentoxid übergeführt wird. Der vanadinpentoxidhaltige Träger wird nun mit einer wässrigen Lösung von Palladiumchlorid getränkt, so dass sich auf dem Träger 0,5 Gew.-% Palladium befinden. Der getränkte Träger wird getrocknet und dann mit einer stark verdünnten Hydrazinlösung behandelt. Nach Reduktion des auf dem Träger befindlichen Palladiumchlorids wird die Hydrazinlösung abgegossen und der doppelt imprägnierte Träger mit Wasser gewaschen. Danach wird die Filtermasse getrocknet. Die fertige Filtermasse hat ausgezeichnete Oxidationswirkung für CO sowohl in trockenem Zustande als auch im Gleichgewicht mit 80% relativer Feuchte bei 23°C, und zwar bei niedrigen Konzentrationen von wenigen ml CO pro m³ Luft wie auch bei hohen Konzentrationen von 1,0% und 1,5% CO.

## Patentanspruch

Verfahren zur Herstellung eines Katalysators zur Oxidation von Kohlenstoffmonoxid mit einem Träger aus Aluminiumoxid, dadurch gekennzeichnet, dass der Träger aus hochreinem α-Aluminiumoxid (Reinheitsgrad mehr als 99%) besteht, der mit einer wässrigen Lösung Ammoniumvanadat zur Imprägnierung mit 1 Gew.-% Vanadin getränkt, der imprägnierte Träger im Vakuum getrocknet und zur Umwandlung von Ammoniumvanadat in Vanadinpentoxid bei etwa 200°C erhitzt, danach mit einer wässrigen Lösung von Palladiumchlorid zur Imprägnierung mit 0,5 Gew.-% Palladium getränkt, anschliessend getrocknet und mit stark verdünnter Hydrazinlösung behandelt, das Palladiumchlorid reduziert, die Hydrazinlösung abgegossen und der doppelt imprägnierte Träger mit Wasser gewaschen wird.

## Claim

A process for preparing a catalyst for the oxidation of carbon monoxide with a carrier of aluminium oxide, characterised in that the carrier comprises an extremely pure α-aluminium oxide (with a degree of purity of over 99%) and is saturated with an aqueous solution of ammonium vanadate for impregnation with 1% by weight of vanadium, the impregnated carrier being dried in a vacuum and heated at around 200°C in order to convert the ammonium vanadate into vanadium pentoxide and subsequently being saturated with an aqueous solution of palladium chloride for impregnation with 0.5% by weight of palladium and finally being dried and treated with a highly diluted hydrazine solution, the palladium chloride being reduced, the hydrazine solution being poured off and the twice impregnated carrier being washed with water.

## Revendication

Procédé de préparation d'un catalyseur plur l'oxydation du monoxyde de carbone, avec un support en alumine, caractérisé en ce que le support est constitué d'alumine alpha de grande pureté (degré de pureté supérieur à 99%), qui est imprégnée d'une solution aqueuse de vanadate d'ammonium afin d'obtenir une imprégnation à 1% (en poids) de vanadium, le support imprégné est séché sous vide et chauffé à environ 200°C afin de transformer le vanadate d'ammonium en pentoxyde de vanadium, puis imprégné d'une solution aqueuse de chlorure de palladium afin d'obtenir une imprégnation de 0,5% (en poids) de palladium, puis séché et traité avec une solution d'hydrazine fortement diluée, le chlorure de palladium est réduit, la solution d'hydrazine décantée, et le support doublement imprégné lavé à l'eau.